# FASCICULE DE BREVET EUROPEEN

(11) **EP 2 724 486 B1**
(45) Date de publication et mention de la délivrance du brevet: **27.11.2019**
(21) Numéro de dépôt: 12738505.2
(22) Date de dépôt: 19.06.2012
(51) Int. Cl.: H04L 1/18, H04N 7/24

(54) **RETRANSMISSION DE DONNÉES PERDUES ENTRE UN ÉMETTEUR ET UN RÉCEPTEUR**
RÜCKÜBERTRAGUNG VON ZWISCHEN EINEM SENDER UND EINEM EMPFÄNGER VERLORENEN DATEN
RETRANSMISSION OF DATA LOST BETWEEN A SENDER AND A RECEIVER

(30) Priorité: 24.06.2011 FR 1155613
(43) Date de publication de la demande: 30.04.2014
(73) Titulaire: Orange, 75015 Paris (FR)
(72) Inventeur: RIGAUDEAU, Serge, 22560 Pleumeur Bodou (FR); CRESTEL, Jerôme, 22300 Lannion (FR); BABONNEAU, Gérard, 35235 Thorigne Fouillard (FR)
(86) Numéro de dépôt international: PCT/FR2012/051381
(87) Numéro de publication internationale: WO 2012/175862

(56) Documents cités:
- EP-A1- 1 211 838
- EP-A1- 1 341 336
- EP-A1- 1 788 742
- EP-A2- 1 168 703
- EP-A2- 1 524 791
- WO-A2-2004/072766
- US-A1- 2009 060 028
- US-A1- 2010 122 135

## Description

Le domaine de l'invention est celui de la transmission de flux de données en temps réel, notamment pour un service de vidéo délinéarisé dit VoD (de l'anglais Video on Demand).

Pour un tel service, on utilise habituellement un protocole de communication informatique appelé Real-Time Transport Protocol (RTP). Avec ce protocole, les données sont transmises sous forme de paquets et un mécanisme de retransmission de paquets de données perdus est mis en place pour assurer un niveau de qualité suffisant en réception.

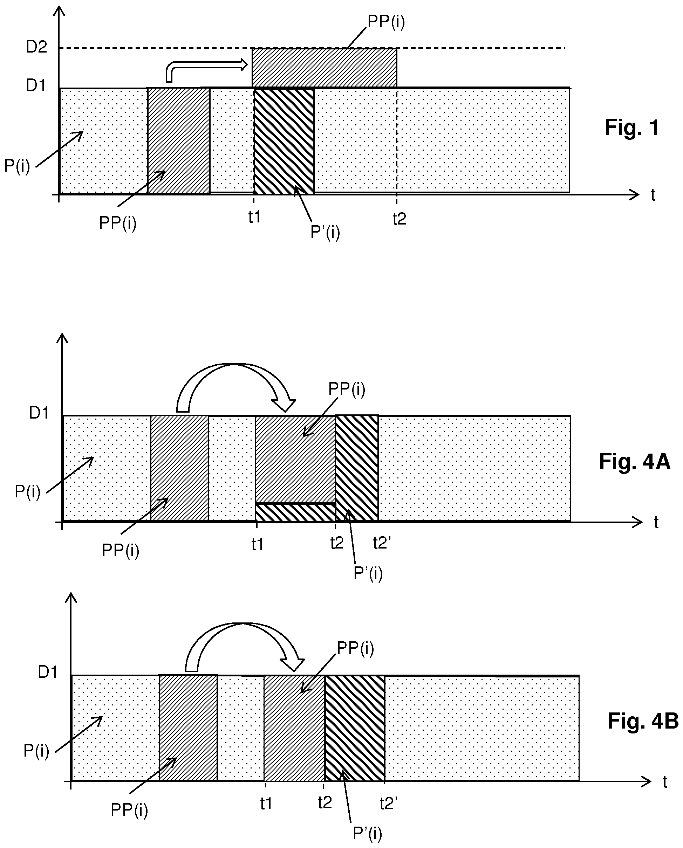

Actuellement, une bande passante supplémentaire est utilisée uniquement en cas de pertes, pour retransmettre les paquets perdus. Cette bande passante dédiée est généralement faible par rapport à la bande passante allouée au service de VoD. La demande JP 2003 046593 illustre un exemple d'emploi d'une telle méthode de retransmission de paquets perdus, représenté sur la figure 1.

Sur cette **figure 1**, des paquets P(i) sont transmis, avec un débit donné D1, dans un flux de données en temps réel. Lorsque certains paquets PP(i) de ce flux sont perdus, ils sont réémis ultérieurement avec d'autres paquets en temps réel, en utilisant ponctuellement un sur-débit afin d'atteindre un débit global de transmission augmenté D2.

Ainsi, durant l'intervalle de temps [t1;t2] pendant lequel les paquets perdus PP(i) sont réémis, ces paquets PP(i) réémis sont émis en même temps que d'autres paquets en temps réel P'(i), sans que le flux de données en temps réel ne soit modifié par la présence de ces paquets de retransmission. En réception, une mémoire tampon permet de mémoriser les données retransmises. La taille de la mémoire tampon et la valeur de la bande passante supplémentaire déterminent la taille maximale des pertes qu'il est possible de corriger. En particulier, plus la valeur de la bande passante supplémentaire (i.e. la différence entre D2 et D1 sur la figure 1) est faible, plus le temps nécessaire pour retransmettre les paquets perdus sera important.

A titre d'exemple, avec une bande passante supplémentaire de 20 % et des pertes de 80 ms, il faut une mémoire tampon de 640 ms pour corriger les pertes, si le délai entre la demande de retransmission et la réception du premier paquet réémis est de 240 ms, ceci pouvant se reproduire toutes les 720 ms.

Ainsi, on voit que les pertes que l'on peut corriger sont relativement courtes et qu'elles ne doivent pas être trop fréquentes. Ce mécanisme de correction est donc perfectible.

La demande EP 1 788 742 décrit un système MIMO-OFDM dans lequel la retransmission de paquets perdus se fait sur certaines antennes de l'émetteur en parallèle de la transmission de paquets sur d'autres antennes de l'émetteur. La demande US 2010/0122135 décrit un mécanisme de retransmission de données applicable notamment à la transmission de signaux HDMI. La demande US 2009/0060028 décrit un mécanisme de retransmission de paquets perdus, dans le cadre de la télévision sur IP, utilisant un surdébit tel que décrit précédemment relativement à la figure 1. Enfin, la demande WO 2004/072766 décrit un système de transmission de données dans lequel un récepteur peut instruire à un émetteur d'avancer ou au contraire de retarder toute émission de nouveaux paquets, ce qui peut permettre la retransmission de nouveaux paquets qui auraient été perdus.

La présente invention a pour but de résoudre les inconvénients de la technique antérieure en fournissant un procédé d'émission d'un flux de données temps réel transmis à un débit donné sous forme de paquets entre un émetteur et un récepteur dans un réseau de télécommunications, ce procédé comportant les étapes suivantes :
- réception d'une demande de réémission de paquets perdus ; et
- émission de paquets réémis et de paquets temps réel, les paquets réémis étant transmis en priorité par rapport aux paquets temps réel.

Les paquets réémis qui sont transmis en priorité par rapport aux paquets temps réel sont émis durant un intervalle de temps pendant lequel les paquets temps réel sont transmis à un débit de transmission inférieur au débit donné, ce qui permet d'accélérer la retransmission des paquets perdus et donc la correction de la perte de ces paquets.

Selon une caractéristique particulièrement avantageuse de ce mode particulier de réalisation, les paquets réémis sont émis à un débit de retransmission égal à la différence entre un débit supérieur au débit de donné et le débit de transmission des paquets temps réel durant cet intervalle de temps, ce qui permet une transmission des paquets avec un sur-débit permettant de corriger les pertes de paquets tout en optimisant l'utilisation de la mémoire tampon. Ainsi, pour une taille de mémoire tampon donnée, il est possible de corriger des pertes plus importantes qu'avec la technique antérieure. De manière alternative, si l'on se fixe une longueur temporelle de perte à corriger, il est possible d'utiliser une mémoire tampon de taille réduite par rapport à la technique antérieure.

Les paquets temps réel du flux de données temps réel et les paquets réémis sont transmis en utilisant le protocole RTP. L'utilisation d'un tel mécanisme de correction de pertes est particulièrement avantageuse dans le cas où le protocole RTP est employé, car cela permet d'offrir une certaine flexibilité temporelle à de ce protocole en matière de correction de pertes.

L'invention concerne aussi un procédé de réception selon la revendication 3.

L'invention concerne aussi un émetteur selon la revendication 4.

L'invention concerne également un récepteur selon la revendication 6.

Dans un mode particulier de réalisation, les différentes étapes des procédés selon l'invention sont déterminées par des instructions de programmes d'ordinateur. En conséquence, l'invention vise aussi un programme d'ordinateur sur un support d'informations, ce programme étant susceptible d'être mis en œuvre dans le processeur d'un émetteur ou récepteur ci-avant, ce programme comportant des instructions adaptées à la mise en œuvre des étapes d'un procédé tel que décrit ci-dessus. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tels que mentionnés ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation préférés décrits en référence aux figures dans lesquelles, outre la figure 1 déjà mentionnée au sujet de l'état de la technique :
- la figure 2 représente de façon schématique les équipements impliqués dans la présente invention ;
- la figure 3 représente un organigramme du procédé selon l'invention ;
- les figures 4A et 4B illustrent la transmission des paquets en temps réel et des paquets réémis selon un mode de réalisation de la présente invention ; et
- les figures 5A et 5B illustrent la transmission des paquets en temps réel et des paquets réémis selon un autre mode de réalisation de la présente invention.

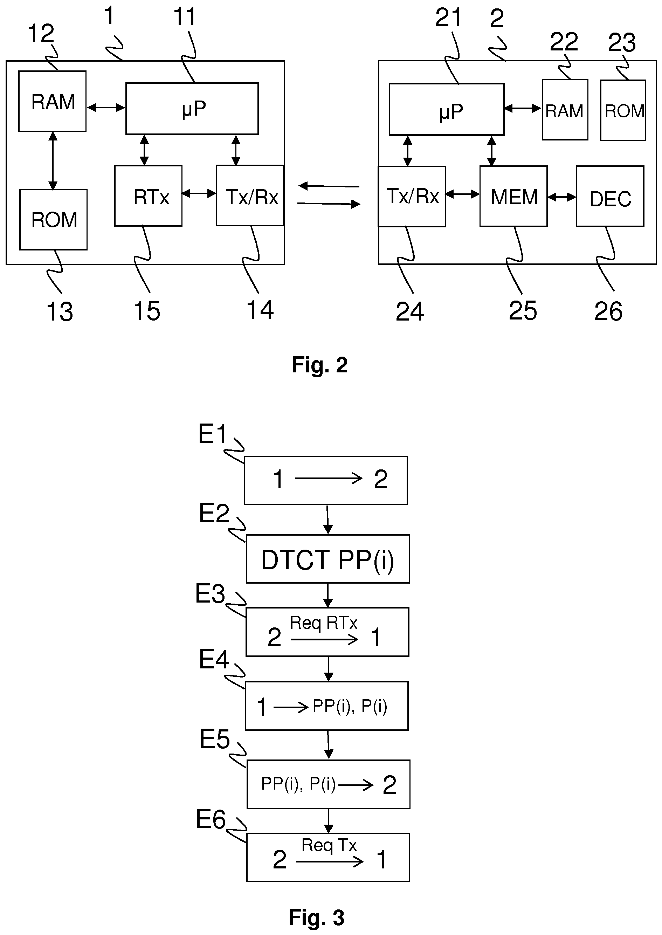

Selon un mode de réalisation de l'invention représenté à la **figure 2****,** un émetteur 1 émet des données à destination d'un récepteur 2, avec un débit D1 donné. L'émetteur 1 est par exemple un serveur qui diffuse un flux de données en temps réel, par exemple un service de vidéo délinéarisé dit VoD (de l'anglais Video on Demand).

Le protocole de communication informatique appelé Real-Time Transport Protocol (RTP) est utilisé. Ce protocole est lui-même basé sur le protocole UDP (d'après l'anglais « User Datagram Protocol »). Les données sont transmises sous forme de paquets.

Le protocole RTP ajoute un en-tête spécifique aux paquets pour informer sur le type de média transporté, le séquencement et la synchronisation des datagrammes, afin que le récepteur puisse détecter les datagrammes perdus sur le réseau ou incorrectement reçus, et puisse éventuellement reconstituer un flux continu.

L'émetteur 1 a la structure conventionnelle d'un ordinateur. Il comporte un processeur 11, une mémoire vive 12 et une mémoire morte 13. Il comporte des moyens d'émission/réception 14 de données. Il comporte également une mémoire de réémission 15, dans laquelle il mémorise les données émises et qui permet de réémettre les données perdues en réception.

Selon l'invention, les moyens d'émission/réception de l'émetteur 1 sont adaptés à recevoir une demande de réémission de paquets, émise par le récepteur 2. L'émetteur met alors en œuvre une émission de paquets réémis et de paquets temps réel, les paquets réémis étant transmis en priorité par rapport aux paquets temps réel.

Le récepteur 2 a lui aussi la structure conventionnelle d'un ordinateur. Il comporte un processeur 21, une mémoire vive 22 et une mémoire morte 23. Il comporte également des moyens d'émission/réception 24 de données. Il comporte également une mémoire tampon 25 dans laquelle il mémorise les données qu'il reçoit depuis l'émetteur 1. Le récepteur 2 comporte des moyens classiques de décodage de flux en temps réel 26, comme par exemple un flux vidéo.

Selon l'invention, les moyens d'émission/réception du récepteur 2 sont adaptés à émettre une demande de réémission des paquets perdus, à destination de l'émetteur 2. Selon un exemple, cette demande de réémission peut contenir une demande de réémission à un débit de retransmission donné, par exemple un débit supérieur au débit D1 donné de transmission en en temps réel.

Les moyens d'émission/réception du récepteur 2 sont également adaptés à recevoir des paquets réémis et des paquets temps réel, les paquets réémis ayant été transmis en priorité par rapport aux paquets temps réel et à transmettre les paquets réémis vers la mémoire tampon qui les mémorise.

Le fonctionnement spécifique de ces équipements dans le cadre de l'invention va maintenant être décrit. Comme représenté à la **figure 3**, les étapes suivantes sont mises en œuvre pour corriger des pertes de paquets de données selon un mécanisme amélioré.

A une étape E1, l'émetteur 1 émet des paquets de données P(i) constituant un flux dit temps réel, à un débit donné. Il s'agit par exemple d'une vidéo. L'émetteur 1 mémorise les données émises dans la mémoire 15.

A une étape E2, le récepteur 2 reçoit les données émises par l'émetteur 1. Le récepteur analyse les paquets reçus et notamment détecte d'éventuelles pertes de paquets. Le récepteur 2 décode les données reçues pour afficher la vidéo.

On suppose que le récepteur 2 détecte une perte de paquets. A une étape E3, le récepteur 2 envoie alors une requête de retransmission à l'émetteur 1, sous la forme d'une requête de type RTCP (d'après l'anglais Real-Time Transport Control Protocol).

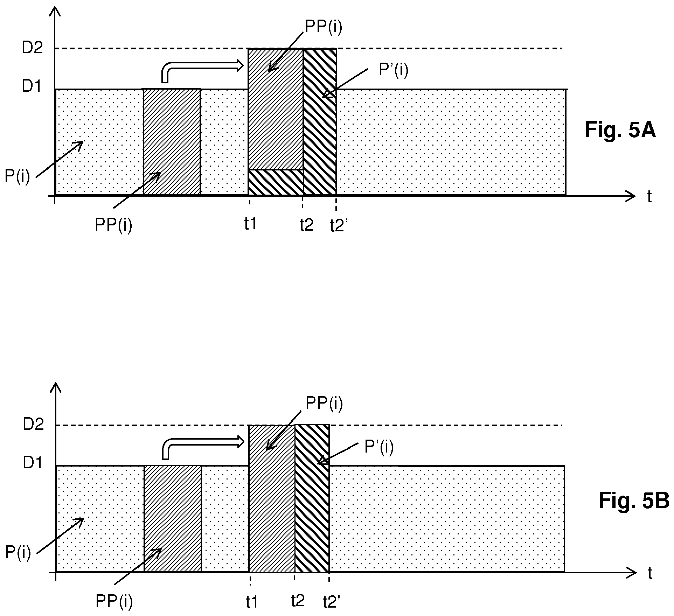

Selon un exemple illustré plus loin en relation avec les figures 5A et 5B, le récepteur 2 peut mettre en œuvre à ce stade un pilotage de débit, qui consiste à demander à l'émetteur 1 de réémettre les paquets perdus PP(i) à un débit de retransmission supérieur au débit d'émission des paquets temps réel. Par exemple, le pilotage de débit est réalisé en utilisant l'attribut « speed » du protocole RTCP. Bien entendu, le pilotage de débit est effectué dans une limite qui respecte les contraintes temps réel pour la fourniture des paquets de données au décodage vidéo pour un affichage fluide de la vidéo.

Lors de cette étape E3, l'émetteur 1 reçoit la requête de réémission de paquets perdus. Il récupère alors les données perdues dans sa mémoire 15 et réémet les paquets perdus PP(i), lors d'une étape E4, au débit de retransmission demandé par le récepteur 2 si ce dernier met en œuvre un pilotage de débit, ou à un débit de retransmission configuré sur l'émetteur 1.

Simultanément, lors de cette étape E4, l'émetteur peut continuer à émettre des paquets P'(i) selon le rythme du flux temps réel. Les paquets perdus PP(i) sont cependant réémis avec une priorité supérieure à celles des paquets temps réel. Pour cela, l'émetteur 1 utilise un mécanisme d'ordonnancement de données à émettre, afin de privilégier les paquets PP(i) réémis sur les paquets P'(i) émis en temps réel.

Dans un premier mode de réalisation, illustré à la **figure 4A**, ce processus de priorisation des paquets perdus PP(i) sur les paquets temps réel P'(i) revient à transmettre, durant un intervalle de temps [t1;t2] pendant lequel les paquets perdus PP(i) sont réémis par l'émetteur 1, les paquets temps réel à un débit D1' inférieur au débit donné D1, c'est-à-dire en réduisant le débit du flux en temps réel, par exemple à un débit réduire égal à 10 % du débit D1. La figure 4A illustre les paquets temps réel P'(i) dont la transmission est décalée dans le temps, jusqu'à un instant t'2, avec un tel mécanisme.

Selon un autre exemple, illustrée à la **figure 4B**, ce processus de priorisation des paquets perdus sur les paquets temps réel est un processus de priorisation « strict », qui revient à interrompre la transmission des paquets temps réel P'(i), durant l'intervalle de temps [t1;t2] pendant lequel seuls les paquets réémis PP(i) sont transmis par l'émetteur 1.

Ceci permet, par rapport à l'état de la technique illustré par la figure 1, de retransmettre plus rapidement les paquets réémis et donc de pouvoir corriger des erreurs lorsque la taille de mémoire tampon est suffisante (par exemple avec une taille de mémoire tampon de 30 s pour une vidéo de 1h30).

Dans un autre mode de réalisation avantageux dans lequel un sur-débit D2 est utilisé, illustré à la **figure 5A**, outre le fait de transmettre, durant un intervalle de temps [t1;t2] pendant lequel les paquets perdus PP(i) sont réémis par l'émetteur 1, les paquets temps réel P'(i) à un débit D1' inférieur au débit donné D1, les paquets PP(i) réémis peuvent être émis à un débit de retransmission correspondant à la différence entre un débit D2, supérieur au débit donné D1, et le débit D1' utilisé pour le flux temps réel durant l'intervalle de temps [t1;t2].

Selon un autre exemple, illustrée à la **figure 5B****,** la transmission des paquets temps réel est interrompue durant l'intervalle de temps [t1;t2] pendant lequel seuls les paquets PP(i) réémis sont transmis par l'émetteur 1 et les paquets PP(i) réémis sont émis avec un débit de retransmission D2 supérieur au débit donné D1, ce qui permet de retransmettre encore plus rapidement les paquets perdus PP(i).

Pendant cette phase de retransmission, les paquets temps réels P'(i), moins prioritaires que les paquets perdus PP(i) réémis, sont stockés du côté de l'émetteur 1. Lorsque les paquets perdus ont été retransmis, on transmet alors, au débit D2 supérieur au débit D1 nominal du flux en temps réel, la totalité de paquets temps réel qui ont été stockés, afin de permettre au flux de rattraper le temps réel et revenir plus rapidement au débit D1.

Ceci permet, par rapport à l'état de la technique illustré par la figure 1, de retransmettre encore plus rapidement les paquets réémis et donc de pouvoir corriger plus de pertes de paquets à taille de mémoire tampon égale, ou de corriger un même nombre de pertes de paquets avec une taille de mémoire tampon inférieure et donc de permettre la réduction de la taille de la mémoire tampon.

A une étape E5, le récepteur 2 reçoit les paquets perdus et réémis et les paquets temps réel. Comme les paquets perdus et réémis ont été émis en priorité par rapport aux paquets temps réel, cela permet d'alimenter immédiatement le décodage vidéo tout en remplissant la mémoire tampon 25.

Lorsque la mémoire tampon 25 atteint un niveau de remplissage suffisant, alors à une étape E6, le récepteur 2 envoie une requête à l'émetteur 1 pour lui demander d'émettre seulement les paquets temps réel, au débit donné. En d'autres termes, l'émetteur 1 revient à l'étape E1.

L'invention permet ainsi d'accélérer le remplissage de la mémoire tampon 25. Les capacités de correction de perte de données sont ainsi augmentées, sans modification des éléments mis en jeu dans la chaîne de transmission, tels que taille de la mémoire tampon 25 ou débit de transmission par exemple.

## Revendications

1. Procédé d'émission d'un flux de données temps réel transmis selon le protocole RTP à un débit donné (D1) sous forme de paquets entre un émetteur (1) et un récepteur (2) dans un réseau de télécommunications,
**caractérisé en ce qu'**il comporte les étapes suivantes :
- réception d'une demande de réémission de paquets perdus ; et
- émission (E4) de paquets réémis (PP(i)) et de paquets temps réel (P'(i)) en utilisant le protocole RTP, les paquets réémis étant transmis en priorité par rapport aux paquets temps réel durant un intervalle de temps pendant lequel les paquets temps réel sont transmis à un débit de transmission inférieur au débit donné (D1).

2. Procédé d'émission selon la revendication 1, **caractérisé en ce que** les paquets réémis sont émis à un débit de retransmission égal à la différence entre un débit (D2) supérieur au débit de donné et le débit de transmission des paquets temps réel durant ledit intervalle de temps.

3. Procédé de réception d'un flux de données temps réel transmis selon le protocole RTP à un débit donné sous forme de paquets entre un émetteur (1) et un récepteur (2) dans un réseau de télécommunications, le récepteur comportant une mémoire tampon (25) pour mémoriser les paquets reçus,
**caractérisé en ce qu'**il comporte les étapes suivantes, après détection d'une perte de paquets (E2) :
- demande (E3) de réémission des paquets perdus ;
- réception (E5) de paquets réémis et de paquets temps réel transmis en utilisant le protocole RTP, les paquets réémis ayant été transmis en priorité par rapport aux paquets temps réel durant un intervalle de temps pendant lequel les paquets temps réel sont transmis à un débit de transmission inférieur au débit donné (D1); et
- mémorisation (E5) des paquets réémis dans la mémoire tampon (25).

4. Emetteur adapté pour émettre un flux de données temps réel selon le protocole RTP à un débit donné (D1) sous forme de paquets vers un récepteur dans un réseau de télécommunications, **caractérisé en ce qu'**il comporte :
- des moyens (14) de réception d'une demande de réémission de paquets perdus ; et
- des moyens (14) d'émission de paquets réémis et de paquets temps réel en utilisant le protocole RTP, les paquets réémis (PP(i)) étant transmis en priorité par rapport aux paquets temps réel, lesdits moyens (14) d'émission de paquets réémis et de paquets temps réel étant configurés pour émettre les paquets réémis durant un intervalle de temps pendant lequel les paquets temps réel sont transmis à un débit de transmission inférieur au débit donné.

5. Emetteur selon la revendication 4, **caractérisé en ce que** les paquets réémis sont émis à un débit de retransmission égal à la différence entre un débit (D2) supérieur au débit de donné et le débit de transmission des paquets temps réel durant ledit intervalle de temps.

6. Récepteur adapté pour recevoir un flux de données temps réel transmis selon le protocole RTP à un débit donné sous forme de paquets depuis un émetteur dans un réseau de télécommunications, le récepteur comportant une mémoire tampon pour mémoriser les paquets reçus et des moyens de détection d'une perte de paquets, **caractérisé en ce qu'**il comporte :
- des moyens (24) de demande de réémission des paquets perdus ;
- des moyens (24) de réception de paquets réémis et de paquets temps réel transmis en utilisant le protocole RTP, les moyens (24) de réception étant adapté au fait que les paquets réémis sont transmis en priorité par rapport aux paquets temps réel durant un intervalle de temps pendant lequel les paquets temps réel sont transmis à un débit de transmission inférieur au débit donné (D1) ; et
- des moyens (25) de mémorisation des paquets réémis dans la mémoire tampon.

7. Programme d'ordinateur comportant des instructions pour l'exécution des étapes du procédé selon l'une des revendications 1 à 3, lorsque ledit programme est exécuté par un processeur d'un émetteur ou d'un récepteur adaptés à la transmission de flux de données en temps réel.

8. Support d'enregistrement lisible par un ordinateur sur lequel est enregistré un programme d'ordinateur comprenant des instructions pour l'exécution des étapes du procédé selon l'une des revendications 1 à 3.

## Patentansprüche

1. Sendeverfahren für einen Echtzeitdatenstrom, der gemäß dem RTP-Protokoll mit einer vorgegebenen Rate (D1) in Form von Paketen zwischen einem Sender (1) und einem Empfänger (2) in einem Telekommunikationsnetzwerk übertragen wird,
**dadurch gekennzeichnet, dass** es die folgenden Schritte aufweist:
- Empfangen einer Anforderung zum erneuten Senden von verlorenen Paketen und
- Senden (E4) von erneut gesendeten Paketen (PP(i)) und von Echtzeitpaketen (P'(i)) unter Verwendung des RTP-Protokolls, wobei die erneut gesendeten Pakete während einer Zeitspanne, in der die Echtzeitpakete mit einer Übertragungsrate, die kleiner als die vorgegebene Rate (D1) ist, übertragen werden, in Bezug auf die Echtzeitpakete priorisiert übertragen werden.

2. Sendeverfahren gemäß Anspruch 1, **dadurch gekennzeichnet, dass** die erneut gesendeten Pakete während der Zeitspanne mit einer Rate für die erneute Übertragung, die gleich der Differenz zwischen einer Rate (D2), die größer als die vorgegebene Rate ist, und der Übertragungsrate der Echtzeitpakte ist, gesendet werden.

3. Empfangsverfahren für einen Echtzeitdatenstrom, der gemäß dem RTP-Protokoll mit einer vorgegebenen Rate in Form von Paketen zwischen einem Sender (1) und einem Empfänger (2) in einem Telekommunikationsnetzwerk übertragen wird, wobei der Empfänger einen Pufferspeicher (25) zum Speichern der empfangenen Pakete aufweist,
**dadurch gekennzeichnet, dass** es nach dem Erkennen eines Paketverlusts (E2) die folgenden Schritte aufweist:
- Anfordern (E3) eines erneuten Sendens der verlorenen Pakete;
- Empfangen (E5) von erneut gesendeten Paketen und von Echtzeitpaketen, die unter Verwendung des RTP-Protokolls übertragen werden, wobei die erneut gesendeten Pakete während einer Zeitspanne, in der die Echtzeitpakete mit einer Übertragungsrate, die kleiner als die vorgegebene Rate (D1) ist, übertragen werden, in Bezug auf die Echtzeitpakete priorisiert übertragen worden sind, und
- Speichern (E5) der erneut gesendeten Pakete in dem Pufferspeicher (25).

4. Sender, der angepasst ist, um einen Echtzeitdatenstrom gemäß dem RTP-Protokoll mit einer vorgegebenen Rate (D1) in Form von Paketen an einen Empfänger in einem Telekommunikationsnetzwerk zu senden, **dadurch gekennzeichnet, dass** er Folgendes aufweist:
- Mittel (14) zum Empfangen einer Anforderung zum erneuten Senden von verlorenen Paketen und
- Mittel (14) zum Senden von erneut gesendeten Paketen und von Echtzeitpaketen unter Verwendung des RTP-Protokolls, wobei die erneut gesendeten Pakete (PP(i)) in Bezug auf die Echtzeitpakete priorisiert übertragen werden, wobei die Mittel (14) zum Senden von erneut gesendeten Paketen und von Echtzeitpaketen dazu ausgestaltet sind, die erneut gesendeten Pakete während einer Zeitspanne, in der die Echtzeitpakete mit einer Übertragungsrate, die kleiner als die vorgegebene Rate ist, übertragen werden, zu senden.

5. Sender gemäß Anspruch 4, **dadurch gekennzeichnet, dass** die erneut gesendeten Pakete während der Zeitspanne mit einer Rate für die erneute Übertragung, die gleich der Differenz zwischen einer Rate (D2), die größer als die vorgegebene Rate ist, und der Übertragungsrate der Echtzeitpakete ist, gesendet werden.

6. Empfänger, der angepasst ist, um einen Echtzeitdatenstrom, der gemäß dem RTP-Protokoll mit einer vorgegebenen Rate in Form von Paketen von einem Sender in einem Telekommunikationsnetzwerk übertragen wird, zu empfangen, wobei der Empfänger einen Pufferspeicher zum Speichern der empfangenen Pakete und Mittel zum Erkennen eines Paketverlusts aufweist, **dadurch gekennzeichnet, dass** er Folgendes aufweist:
- Mittel (24) zum Anfordern eines erneuten Sendens der verlorenen Pakete,
- Mittel (24) zum Empfangen von erneut gesendeten Paketen und von Echtzeitpaketen, die unter Verwendung des RTP-Protokolls übertragen werden, wobei die Mittel (24) zum Empfangen daran angepasst sind, dass die erneut gesendeten Pakete während einer Zeitspanne, in der die Echtzeitpakete mit einer Übertragungsrate, die kleiner als die vorgegebene Rate (D1) ist, übertragen werden, in Bezug auf die Echtzeitpakete priorisiert übertragen werden, und
- Mittel (25) zum Speichern der erneut gesendeten Pakete in dem Pufferspeicher.

7. Computerprogramm, das Anweisungen zur Ausführung der Schritte des Verfahrens gemäß einem der Ansprüche 1 bis 3 aufweist, wenn das Programm von einem Prozessor eines Senders oder eines Empfängers, die für die Übertragung von Datenströmen in Echtzeit angepasst sind, ausgeführt wird.

8. Computerlesbares Aufzeichnungsmedium, auf dem ein Computerprogramm aufgezeichnet ist, das Anweisungen zur Ausführung der Schritte des Verfahrens gemäß einem der Ansprüche 1 bis 3 aufweist.

## Claims

1. Method for transmitting a realtime data stream transmitted according to the RTP protocol at a given bitrate (D1) in the form of packets between a transmitter (1) and a receiver (2) in a telecommunication network,
**characterized in that** it has the following steps:
- reception of a request for retransmission of lost packets; and
- transmission (E4) of retransmitted packets (PP(i)) and realtime packets (P'(i)) using the RTP protocol, the retransmitted packets being transmitted with priority in relation to the realtime packets during a time interval during which the realtime packets are transmitted at a transmission bitrate that is lower than the given bitrate (D1).

2. Transmission method according to Claim 1, **characterized in that** the retransmitted packets are transmitted at a retransmission bitrate that is equal to the difference between a bitrate (D2) that is higher than the given bitrate and the transmission bitrate of the realtime packets during said time interval.

3. Method for receiving a realtime data stream transmitted according to the RTP protocol at a given bitrate in the form of packets between a transmitter (1) and a receiver (2) in a telecommunication network, the receiver having a buffer memory (25) for storing the received packets,
**characterized in that** it has the following steps, after detection of a loss of packets (E2):
- request (E3) for retransmission of the lost packets;
- reception (E5) of retransmitted packets and realtime packets transmitted using the RTP protocol, the retransmitted packets having been transmitted with priority in relation to the realtime packets during a time interval during which the realtime packets are transmitted at a transmission bitrate that is lower than the given bitrate (D1); and
- storage (E5) of the retransmitted packets in the buffer memory (25).

4. Transmitter suited to transmitting a realtime data stream according to the RTP protocol at a given bitrate (D1) in the form of packets to a receiver in a telecommunication network, **characterized in that** it comprises :
- means (14) for receiving a request for retransmission of lost packets; and
- means (14) for transmitting retransmitted packets and realtime packets using the RTP protocol, the retransmitted packets (PP(i)) being transmitted with priority in relation to the realtime packets, said means (14) for transmitting retransmitted packets and realtime packets being configured to transmit the retransmitted packets during a time interval during which the realtime packets are transmitted at a transmission bitrate that is lower than the given bitrate.

5. Transmitter according to Claim 4, **characterized in that** the retransmitted packets are transmitted at a retransmission bitrate that is equal to the difference between a bitrate (D2) that is higher than the given bitrate and the transmission bitrate of the realtime packets during said time interval.

6. Receiver suited to receiving a realtime data stream transmitted according to the RTP protocol at a given bitrate in the form of packets from a transmitter in a telecommunication network, the receiver having a buffer memory for storing the received packets and means for detecting a loss of packets, **characterized in that** it has:
- means (24) for requesting retransmission of the lost packets;
- means (24) for receiving retransmitted packets and realtime packets transmitted using the RTP protocol, the receiving means (24) being suited to the fact that the retransmitted packets are transmitted with priority in relation to the realtime packets during a time interval during which the realtime packets are transmitted at a transmission bitrate that is lower than the given bitrate (D1); and
- means (25) for storing the retransmitted packets in the buffer memory.

7. Computer program having instructions for executing the steps of the method according to one of Claims 1 to 3 when said program is executed by a processor in a transmitter or in a receiver, both of which are suited to transmitting data streams in real time.

8. Recording medium that can be read by a computer on which is recorded a computer program comprising instructions for executing the steps of the method according to one of Claims 1 to 3.
